# EUROPÄISCHE PATENTSCHRIFT

(11) **EP 2 594 446 B1**
(45) Veröffentlichungstag und Bekanntmachung des Hinweises auf die Patenterteilung: **10.11.2021**
(21) Anmeldenummer: 12184932.7
(22) Anmeldetag: 19.09.2012
(51) Int. Cl.: B60W 40/06, B60W 40/02, B60W 30/00, B60W 30/02, B60W 50/00, B60W 30/09, B60W 30/10, B60W 30/095

(54) **Vorrichtung und Verfahren zum Betreiben eines Fahrzeugs**
Apparatus and method for operating a vehicle
Dispositif et procédé de fonctionnement d'un véhicule automobile

(30) Priorität: 15.11.2011 DE 102011086342
(43) Veröffentlichungstag der Anmeldung: 22.05.2013
(73) Patentinhaber: Robert Bosch GmbH, 70442 Stuttgart (DE)
(72) Erfinder: Nordbruch, Stefan, 70806 Kornwestheim (DE); Stolz, Wolfgang, 73033 Goeppingen (DE); Rentschler, Tobias, 75180 Pforzheim (DE); Sommer, Tino, 70771 Leinfelden (DE); Wilhelm, Ulf, 71277 Rutesheim (DE)

(56) Entgegenhaltungen:
- WO-A1-2013/068176
- DE-A1-102008 061 301
- DE-A1-102011 107 196
- US-A1- 2010 228 419
- SKUTEK M ET AL: "Fusion von Sensordaten am Beispiel von Sicherheitsanwendungen in der Automobiltechnik", AUTOMATISIERUNGSTECHNIK -, OLDENBOURG WISSENSCHAFTSVERLAG, MUNCHEN, DE, Bd. 53, Nr. 7, 1. Juli 2005 (2005-07-01), Seiten 295-305, XP009165775, ISSN: 0178-2312, DOI: 10.1524/AUTO.53.7.295.66707
- LUCIEN WALD: "Some Terms of Reference in Data Fusion", IEEE TRANSACTIONS ON GEOSCIENCE AND REMOTE SENSING, IEEE SERVICE CENTER, PISCATAWAY, NJ, US, vol. 37, no. 3, 1 May 1999 (1999-05-01), XP011021311, ISSN: 0196-2892

## Beschreibung

Die Erfindung betrifft eine Vorrichtung und ein Verfahren zum Betreiben eines Fahrzeugs. Die Erfindung betrifft ferner ein System zum Betreiben eines Fahrzeugs sowie ein Computerprogramm.

### Stand der Technik

In bekannten Fahrzeugen sind in der Regel Fahrerassistenzfunktionen auf verschiedenen Steuergeräten verteilt. Diese Steuergeräte sind üblicherweise in die für die Funktion notwendigen Umfeldsensoren zum sensorischen Erfassen eines Fahrzeugumfelds integriert. Die Steuergeräte verarbeiten die Umfelddaten, welche mittels der Umfeldsensoren bereitgestellt werden, und eine entsprechende Reaktion wird über ein Fahrzeug-Netzwerk bei einem Aktor angefordert. Die Aktoren befinden sich üblicherweise in Wirkketten für die Fahrzeugbewegung, beispielsweise Bremsen, Beschleunigen, Lenken, Dämpfen oder Federn. Es ist bekannt, dass hierbei mehrere verschiedene Fahrzeugumfeldmodelle mittels verschiedener Umfeldsensoren generiert und in unterschiedlichen Steuergeräten berechnet werden. Bei einer Vielzahl an Fahrerassistenzfunktionen kommen die so ausgebildeten Strukturen an ihre Grenzen, insbesondere wenn mehrere Fahrerassistenzfunktionen in dem Fahrzeug gleichzeitig verbaut sind. DE 10 2008 061301 A1 offenbart eine Vorrichtung bzw. Verfahren nach dem Oberbegriff des Anspruchs 1 bzw. 4.

### Offenbarung der Erfindung

Die der Erfindung zugrunde liegende Aufgabe kann daher darin gesehen werden, eine verbesserte Vorrichtung und ein verbessertes Verfahren zum Betreiben eines Fahrzeugs bereitzustellen, welche effizient mehrere Fahrerassistenzfunktionen bereitstellen können.

Die der Erfindung zugrunde liegende Aufgabe kann auch darin gesehen werden, ein entsprechendes System zum Betreiben eines Fahrzeugs sowie ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Gemäß einem Aspekt wird eine Vorrichtung zum Betreiben eines Fahrzeugs bereitgestellt. Die Vorrichtung umfasst ein Fahrzeugumfeldmodul zum Bereitstellen eines Fahrzeugumfeldmodells. Das Fahrzeugumfeldmodul weist mehrere Sensorschnittstellen für Umfeldsensoren zum sensorischen Erfassen eines Fahrzeugumfelds auf. Das heißt also insbesondere, dass mittels der Sensorschnittstellen Umfeldsensoren mit dem Fahrzeugumfeldmodul verbunden werden können, so dass diese in vorteilhafter Weise dem Fahrzeugumfeldmodell Umfeldsensordaten bereitstellen können, wobei diese Umfeldsensordaten einem Fahrzeugumfeld entsprechen.

Ferner ist ein Sensordatenfusionierer zum Durchführen einer Fusion von Umfeldsensordaten der Umfeldsensoren vorgesehen. Das heißt also insbesondere, dass der Sensordatenfusionierer basierend auf den Umfeldsensordaten eine Sensordatenfusion durchführen kann.

Des Weiteren ist eine Berechnungseinrichtung zum Berechnen des Fahrzeugumfeldmodells in Abhängigkeit der fusionierten Umfeldsensordaten gebildet. Das heißt also insbesondere, dass die Berechnungseinrichtung ein Fahrzeugumfeldmodell berechnen kann, wobei die Berechnung auf den fusionierten Umfeldsensordaten basiert.

Nach einem anderen Aspekt wird ein Verfahren zum Betreiben eines Fahrzeugs bereitgestellt. Hierbei werden Umfeldsensordaten von mehreren Umfeldsensoren zum sensorischen Erfassen eines Fahrzeugumfelds fusioniert. Abhängig von den fusionierten Umfeldsensordaten wird ein Fahrzeugumfeldmodell berechnet.

Nach noch einem Aspekt wird ein System zum Betreiben eines Fahrzeugs bereitgestellt. Das System umfasst die Vorrichtung zum Betreiben eines Fahrzeugs, wobei das Fahrzeugumfeldmodul eine Fahrzeugbewegungsschnittstelle für ein Fahrzeugbewegungsmodul umfasst, welches ausgebildet ist, Steuersignale für ein Steuergerät eines Stellsystems des Fahrzeugs abhängig von dem bereitgestellten Fahrzeugumfeldmodell zu bilden. Hierbei ist vorgesehen, dass an den Sensorschnittstellen jeweils ein Umfeldsensor angekoppelt ist und an der Fahrzeugbewegungsschnittstelle das Fahrzeugbewegungsmodell angekoppelt ist.

Nach einem anderen Aspekt wird ein Computerprogramm bereitgestellt, welches Programmcode zur Ausführung des Verfahrens zum Betreiben eines Fahrzeugs umfasst, wenn das Computerprogramm auf einem Computer ausgeführt wird.

Die Erfindung umfasst also insbesondere den Gedanken, zunächst sämtliche Umfeldsensordaten der in einem Fahrzeug verbauten Umfeldsensoren zu sammeln und zu fusionieren. Basierend auf den fusionierten Umfeldsensordaten wird ein gemeinsames Fahrzeugumfeldmodell gebildet, wobei die einzelnen Stellsysteme des Fahrzeugs dann abhängig von diesem gemeinsamen Fahrzeugumfeldmodell gesteuert werden können. Das heißt also insbesondere, dass im Gegensatz zum Stand der Technik, wo jeder einzelne Umfeldsensor sein eigenes Fahrzeugumfeldmodell basierend auf seinen eigenen erfassten Umfeldsensordaten gebildet hat, ein für sämtliche Fahrerassistenzfunktionen notwendiges Fahrzeugumfeldmodell gebildet wird. Dadurch wird insbesondere in vorteilhafter Weise bewirkt, dass eine entsprechende Vernetzung in dem Fahrzeug einfacher und somit fehlerunanfälliger realisiert werden kann. Die Umfeldsensoren müssen lediglich mit dem Fahrzeugumfeldmodell verbunden werden und benötigen in der Regel somit kein eigenes Steuergerät zur Bildung eines eigenen Fahrzeugumfeldmodells. Das spart insbesondere Kosten und Material ein.

Eine Sensordatenfusion im Sinne der vorliegenden Erfindung bezeichnet insbesondere eine Verknüpfung der Umfeldsensordaten der mehreren Umfeldsensoren. Es ist insbesondere vorgesehen, die rohen Umfeldsensordaten vor einer weiteren Signalverarbeitung miteinander zu verknüpfen. Das heißt also insbesondere, dass eine Sensordatenfusion basierend auf den Rohdaten der Umfeldsensoren durchgeführt wird, insbesondere vor eventuellen Signalverarbeitungs- und/oder Mustererkennungsschritten.

Gemäß einer Ausführungsform umfasst das Fahrzeugumfeldmodul eine Fahrzeugbewegungsschnittstelle für ein Fahrzeugbewegungsmodul. Das Fahrzeugbewegungsmodul ist insbesondere ausgebildet, Steuersignale für ein Steuergerät eines Stellsystems des Fahrzeugs abhängig von dem bereitgestellten Fahrzeugumfeldmodell zu bilden. Das heißt also insbesondere, dass das Fahrzeugumfeldmodul dem Fahrzeugbewegungsmodul das berechnete Fahrzeugumfeldmodul bereitstellt, so dass dieses dann basierend auf dem Fahrzeugumfeldmodul Steuersignale bilden kann und diese an ein Steuergerät eines Stellsystems senden kann. So kann beispielsweise das Fahrzeugumfeldmodell anzeigen, dass sich ein weiteres Fahrzeug vor dem Fahrzeug befindet. Ein entsprechendes Steuersignal wäre beispielsweise ein Bremssignal an ein Steuergerät eines Bremssystems des Fahrzeugs, um das Fahrzeug autonom abzubremsen, so dass dieses nicht mit dem vorausfahrenden Fahrzeug kollidiert.

Ein Stellsystem im Sinne der vorliegenden Erfindung bezeichnet insbesondere ein System, welches in einen Fahrzeugbetrieb und/oder eine Fahrzeugführung eingreifen kann. Ein Stellsystem kann beispielsweise ein Lenkungssystem, insbesondere ein elektrisches Servolenkungssystem, sein. Ein Stellsystem kann beispielsweise auch ein Triebstrangsystem sein. Ein Stellsystem kann vorzugsweise ein Fahrdynamikregelungssystem sein, was auch als elektronisches Stabilitätsprogramm (ESP) bekannt ist. Ein Stellsystem kann beispielsweise auch ein Antiblockiersystem oder ein Antriebsschlupfregelungssystem sein. Ein Stellsystem kann beispielsweise ein Bremssystem oder ein Antriebssystem des Fahrzeugs sein. Ein Stellsystem bezeichnet also insbesondere ein System, welches sich gerichtete Anforderungen an eine Fahrzeugbewegung wie beispielsweise eine Beschleunigung, ein Bremsen und/oder ein Lenken umsetzt, um das Fahrzeug entsprechend zu führen.

Ein Steuergerät im Sinne der vorliegenden Erfindung kann auch als eine Steuerung bezeichnet werden und kann insbesondere in Hardware und/oder in Software ausgeführt sein. Solche Steuerungen steuern insbesondere die an sie angeschlossenen Stellsysteme des Fahrzeugs, wobei dieses Steuern insbesondere in Abhängigkeit von den Steuersignalen des Signalverwaltungsmoduls durchgeführt wird.

Umfeldsensoren im Sinne der vorliegenden Erfindung stellen insbesondere Sensorsignale bereit, welche vorzugsweise Umfeldsensordaten umfassen, welche dem sensorisch erfassten Fahrzeugumfeld entsprechen. Solche Umfeldsensordaten können insbesondere auch als Fahrzeugumfelddaten bezeichnet werden und umfassen insbesondere Informationen über das Fahrzeugumfeld. Solche Informationen können beispielsweise physische Objekte betreffen. Ein physisches Objekt kann beispielsweise ein anderes Fahrzeug, ein Fußgänger, ein Verkehrszeichen, eine Signalanlage oder Begrenzungspfosten der Straße sein. Insbesondere umfassen die Fahrzeugumfelddaten physische Merkmale bzw. Eigenschaften der Straße wie beispielsweise eine Straßenbreite, eine Fahrbahnbreite, Kurvenradien und/oder Abfahrten. Insbesondere sind bei stationären physischen Objekten auch die jeweilige Position und Abmaßungen in den Fahrzeugumfelddaten gespeichert. Fahrzeugumfelddaten können insbesondere auch Informationen über aktuelle Gegebenheiten umfassen, wie beispielsweise, dass sich an der entsprechenden Position eine Baustelle mit veränderten Stra-ßeneigenschaften befindet. Fahrzeugumfelddaten können insbesondere auch Fahrbahnspurdaten umfassen, welche beispielsweise die Information über eine Fahrbahnlinienfarbe umfassen. Fahrzeugumfelddaten im Sinne der vorliegenden Erfindung umfassen insbesondere Bilder und/oder Videos. Den Fahrzeugumfelddaten ist insbesondere eine entsprechende Position zugeordnet, welche insbesondere mittels eines Global-Positioning-System (GPS)-Sensors bestimmt werden kann.

Umfeldsensoren im Sinne der vorliegenden Erfindung können beispielsweise Radarsensoren, Videosensoren, insbesondere Videosensoren einer Stereo-Kamera oder eines Umfeldkamerasystems zum bildlichen Erfassen eines 360°-Umfelds des Fahrzeugs, oder Ultraschallsensoren umfassen. Umfeldsensoren können beispielsweise Lidar-Sensoren, Flugzeitsensoren und/oder ein Fotomischdetektoren, auf englisch auch Photonic Mixing Device-(PMD)-Sensoren genannt, umfassen. Ein PMD-Sensor kann insbesondere als ein Bildsensor in TOF-Kameras verwendet werden, wobei TOF für "Time of Flight" steht, und auf Lichtlaufzeitverfahren basiert. Bei der Videokamera kann es sich insbesondere um eine Stereovideokamera handeln.

Eine Fahrerassistenzfunktion im Sinne der vorliegenden Erfindung bezeichnet insbesondere einen autonomen oder teilautonomen Eingriff in einen Fahrzeugbetrieb. Ein solcher Eingriff kann vorzugsweise eine Bremsung, eine Beschleunigung, eine Lenkung sein. Vorzugsweise wird ein solcher Eingriff mittels der Stellsysteme bewirkt. Eine Fahrerassistenzfunktion kann insbesondere eine Bereitstellung einer Information betreffend eine Fahrzeugführung sein. Insbesondere kann eine Fahrerassistenzfunktion eine Anzeige eines Fahrzeugumfelds sein.

Nach einer weiteren Ausführungsform umfasst das Fahrzeugumfeldmodul eine Navigationsschnittstelle für ein Navigationssystem. Der Sensordatenfusionierer ist insbesondere eingerichtet, die mittels des Navigationssystems bereitgestellten Navigationsdaten mit den Umfeldsensordaten zu fusionieren. Das heißt also insbesondere, dass das Navigationssystem über die Navigationsschnittstelle Navigationsdaten bereitstellt, welche mittels des Sensordatenfusionierers mit den Umfeldsensordaten fusioniert werden. Dadurch kann in vorteilhafter Weise ein noch genaueres Fahrzeugumfeldmodell berechnet werden. Navigationsdaten können beispielsweise Kartendaten einer digitalen Karte umfassen.

In einer anderen Ausführungsform umfasst das Fahrzeugumfeldmodul eine Kommunikationsschnittstelle für ein Kommunikationssystem zum Empfangen von einem Fahrzeugumfeld entsprechende extern von dem Fahrzeug ausgesandten externen Umfeldsensordaten. Der Sensordatenfusionierer ist insbesondere ausgebildet, die externen Umfeldsensordaten mit den Umfeldsensordaten zu fusionieren. Das heißt also insbesondere, dass mittels der Kommunikationsschnittstelle es in vorteilhafter Weise ermöglicht ist, ein Kommunikationssystem an das Fahrzeugumfeldmodul anzuschließen. Ein solches Kommunikationssystem empfängt insbesondere externe Umfeldsensordaten, welche nach der Erfindung von weiteren Umfeldsensoren von weiteren Fahrzeugen und/oder beispielsweise von weiteren Umfeldsensoren einer Infrastruktur, beispielsweise einem Gebäude, gebildet sind. Solche externen Umfeldsensordaten können dann insbesondere dafür verwendet werden, um eine Sensordatenfusion mit den Umfeldsensordaten durchzuführen, um dann in vorteilhafter Weise ein entsprechendes Fahrzeugumfeldmodell zu berechnen. Die Umfeldsensordaten, welche mittels der Umfeldsensoren des Fahrzeugs selber gebildet werden, können vorzugsweise als interne Umfeldsensordaten bezeichnet werden.

Eine Kommunikation zwischen dem Fahrzeug und den weiteren Fahrzeugen wird gemäß der Erfindung mittels des Car2Car-Kommunikationsverfahrens durchgeführ.

Insbesondere kann vorgesehen sein, dass die externen Umfeldsensordaten mittels Umfeldsensoren gebildet werden, welche an einer feststehenden Infrastruktur wie beispielsweise einem Gebäude oder einem Verkehrszeichen oder einer Brücke angeordnet sind. Eine entsprechende Kommunikation kann dann beispielsweise mittels des Car2l-Kommunikationsverfahrens durchgeführt werden. Hierbei steht das "I" für den englischen Begriff "Infrastructure".

Nach einer anderen Ausführungsform ist die Berechnungseinrichtung ausgebildet, einen mittels des Fahrzeugs befahrbaren Raum zu berechnen. Vorzugsweise wird der berechnete befahrbare Raum dem Fahrzeugbewegungsmodul bereitgestellt, so dass dieses entsprechende Steuersignale für das Steuergerät des Stellsystems bilden kann. Dadurch wird in vorteilhafter Weise eine Fahrzeugsicherheit erheblich erhöht.

Nach einer Ausführungsform kann vorgesehen sein, dass das Fahrzeugbewegungsmodul in ein Steuergerät bzw. einer Steuerung des Fahrzeugs integriert ist. Bei einem solchen Steuergerät kann es sich beispielsweise um ein Umfeldsensorsteuergerät handeln. Beispielsweise kann das Steuergerät ein Radar-Steuergerät, ein Video-Steuergerät oder ein ESP-Steuergerät sein.

In einer anderen Ausführungsform kann vorgesehen sein, dass eine Arbitrierungseinrichtung zum Arbitrieren bzw. Priorisieren von Daten, insbesondere von Umfeldsensordaten und/oder Navigationsdaten, gebildet ist. Dadurch ist es in vorteilhafter Weise ermöglicht, dass vor einer Sensordatenfusion gezielt einige Daten aus der Vielzahl an Daten ausgewählt werden, um nur diese ausgewählten Daten miteinander zu fusionieren. Dadurch wird in vorteilhafter Weise ein Rechenaufwand erheblich verringert.

Die Erfindung wird im Folgenden anhand von bevorzugten Ausführungsbeispielen näher erläutert. Hierbei zeigen
- Fig. 1: eine Vorrichtung zum Betreiben eines Fahrzeugs,
- Fig. 2: eine weitere Vorrichtung zum Betreiben eines Fahrzeugs,
- Fig. 3: ein Ablaufdiagramm eines Verfahrens zum Betreiben eines Fahrzeugs,
- Fig. 4: ein System zum Betreiben eines Fahrzeugs und
- Fig. 5: ein weiteres System zum Betreiben eines Fahrzeugs.

Im Folgenden werden für gleiche Merkmale gleiche Bezugszeichen verwendet.

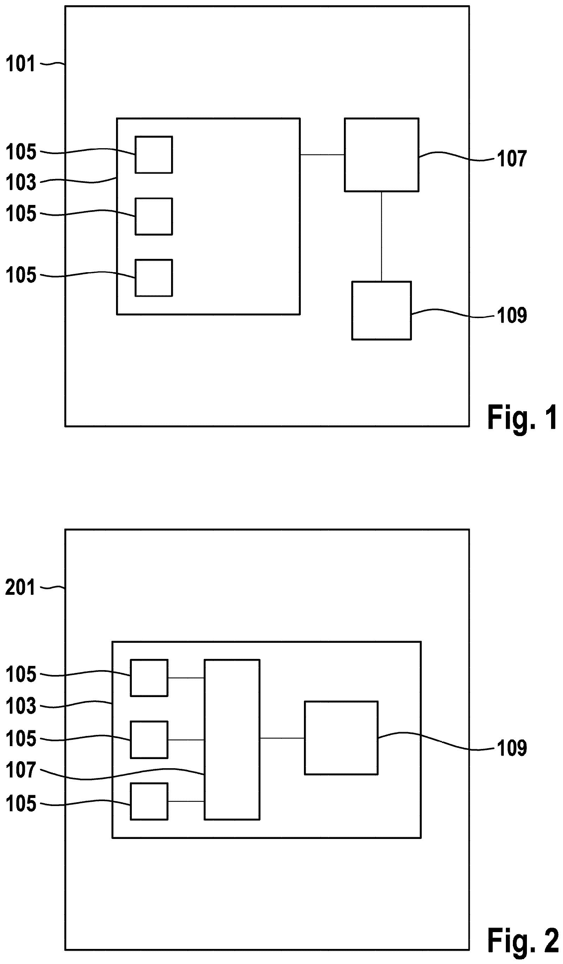

Fig. 1 zeigt eine Vorrichtung 101 zum Betreiben eines Fahrzeugs (nicht gezeigt). Die Vorrichtung 101 umfasst ein Fahrzeugumfeldmodul 103, welches mehrere Sensorschnittstellen 105 aufweist, an welche Umfeldsensoren zum sensorischen Erfassen eines Fahrzeugumfelds angeschlossen bzw. angekoppelt werden können. Ferner umfasst die Vorrichtung 101 einen Sensordatenfusionierer 107, welcher ausgebildet ist, eine Sensordatenfusion der mittels der Umfeldsensoren bereitgestellten Umfeldsensordaten durchzuführen. Des Weiteren ist eine Berechnungseinrichtung 109 gebildet, welche in Abhängigkeit der fusionierten Umfeldsensordaten ein Fahrzeugumfeldmodell berechnet.

Fig. 2 zeigt eine weitere Vorrichtung 201 zum Betreiben eines Fahrzeugs. Die Vorrichtung 201 umfasst analog zu der Vorrichtung 101 gemäß Fig. 1 das Fahrzeugumfeldmodul 103 umfassend mehrere Sensorschnittstellen 105 sowie den Sensordatenfusionierer 107 und die Berechnungseinrichtung 109. Im Unterschied zu Fig. 1 sind der Sensordatenfusionierer 107 und die Berechnungseinrichtung 109 in das Fahrzeugumfeldmodul 103 integriert, so dass in vorteilhafter Weise insbesondere ein besonders kompakter Aufbau ermöglicht ist. Ferner können entsprechende Signalverbindungen zwischen den einzelnen Komponenten kurz ausgelegt werden, was eine Signallaufzeit in vorteilhafter Weise erheblich verkürzt.

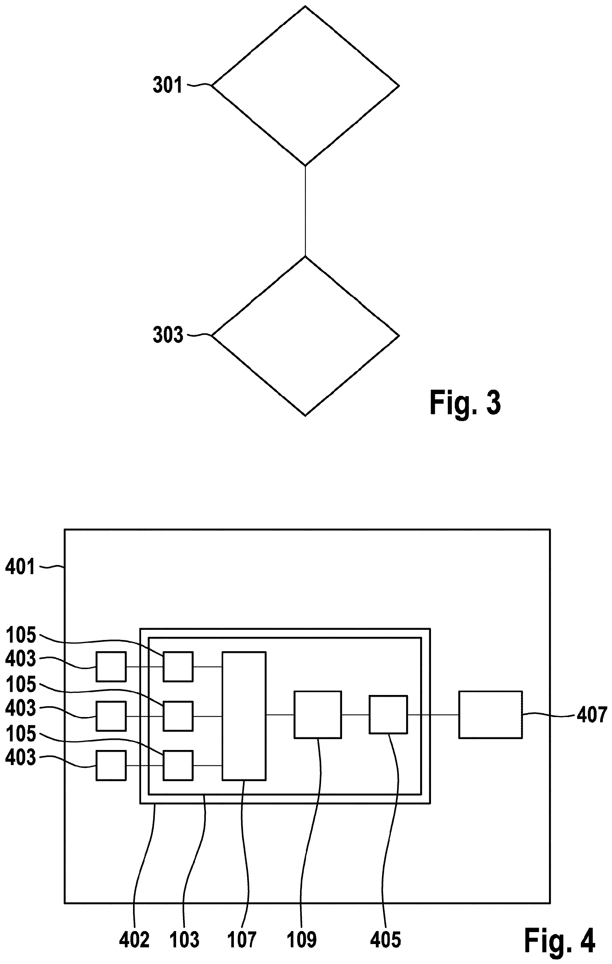

Fig. 3 zeigt ein Ablaufdiagramm eines Verfahrens zum Betreiben eines Fahrzeugs. Gemäß einem Schritt 301 werden Umfeldsensordaten von mehreren Umfeldsensoren zum sensorischen Erfassen eines Fahrzeugumfelds fusioniert, wobei gemäß einem Schritt 303 abhängig von den fusionierten Umfeldsensordaten ein Fahrzeugumfeldmodell berechnet wird.

In einer nicht gezeigten Ausführungsform kann vorgesehen sein, dass Navigationsdaten und/oder externe Umfeldsensordaten bereitgestellt werden, wobei eine Sensordatenfusion basierend auf den Umfeldsensordaten und den Navigationsdaten bzw. den externen Umfeldsensordaten durchgeführt wird, so dass abhängig von den so fusionierten Umfeldsensordaten ein entsprechendes Fahrzeugumfeldmodell berechnet wird. aufweisen.

Fig. 4 zeigt ein System 401 zum Betreiben eines Fahrzeugs. Das System 401 umfasst eine Vorrichtung 402 zum Betreiben eines Fahrzeugs, welche im Wesentlichen analog zu der Vorrichtung 101 gemäß Fig. 2 gebildet ist. An den mehreren Sensorschnittstellen 105 ist jeweils ein Umfeldsensor 403 angeschlossen bzw. angekoppelt. Zusätzlich zu der Vorrichtung 101 gemäß Fig. 2 umfasst die das Fahrzeugumfeldmodul 103 der Vorrichtung 402 eine Fahrzeugbewegungsschnittstelle 405, an welche ein Fahrzeugbewegungsmodul 407 angeschlossen bzw. angekoppelt ist.

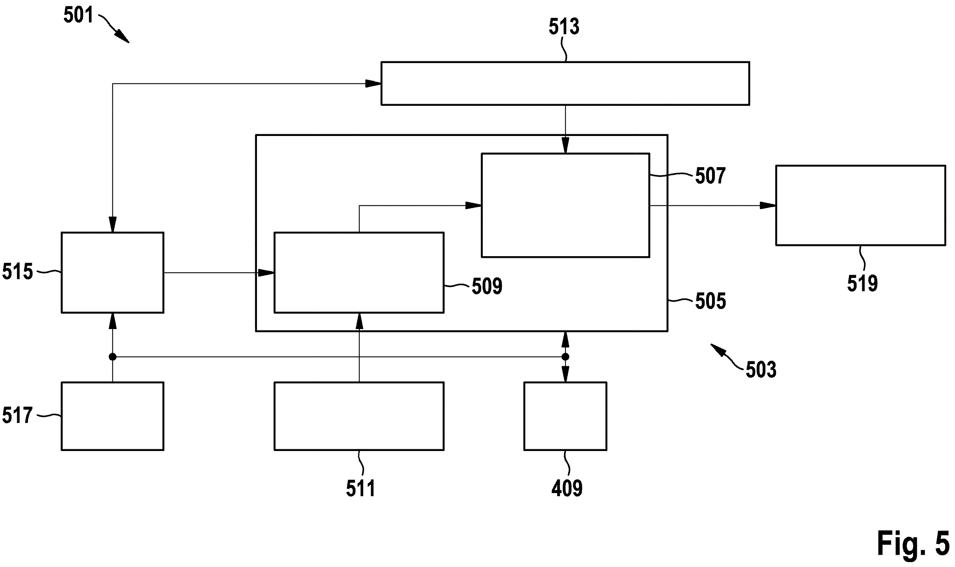

Fig. 5 zeigt ein weiteres System 501 zum Betreiben eines Fahrzeugs. Das System 501 umfasst eine Vorrichtung 503 zum Betreiben eines Fahrzeugs. Die Vorrichtung 503 umfasst ein Signalverwaltungsmodul 505.

Das Signalverwaltungsmodul 505 umfasst ein Fahrzeugbewegungsmodul 507 und ein Fahrzeugumfeldmodul 509. Das Fahrzeugumfeldmodul 509 empfängt Sensorsignale bzw. Umfeldsensordaten von Umfeldsensoren 511 und stellt basierend darauf ein Fahrzeugumfeldmodell dem Fahrzeugbewegungsmodul 507 bereit, so dass dieses insbesondere basierend darauf Steuersignale bildet. Der Übersicht halber sind diese Umfeldsensordaten in Fig. 5 symbolisch mittels eines Rechtecks mit dem Bezugszeichen 511 gekennzeichnet.

Ferner ist ein Energieverwaltungsmodul 513 gebildet, welches über eine entsprechende hier nicht gezeigte Energieverwaltungsschnittstelle mit dem Fahrzeugbewegungsmodul 507 gekoppelt bzw. verbunden ist. Das Energieverwaltungsmodul 513 empfängt Daten einer Fahrzeugumfeldberechnungseinrichtung 515, welches wiederum Daten eines Navigationssystems 517 empfängt umfassend eine digitale Karte. Die Fahrzeugumfeldberechnungseinrichtung 515 berechnet insbesondere ein Fahrzeugumfeld basierend auf den mittels des Navigationssystems 517 bereitgestellten Navigationsdaten. In einer nicht gezeigten Ausführungsform kann vorgesehen sein, dass die Fahrzeugumfeldberechnungseinrichtung 515 noch Daten von anderen Umfeldsensoren von anderen Fahrzeugen bzw. einer Infrastruktur erhält. Diese Daten werden dem Energieverwaltungsmodul 513 bereitgestellt, welches entsprechend weitere Steuersignale bildet und mittels der hier nicht gezeigten Energieverwaltungsschnittstelle dem Fahrzeugbewegungsmodul 507 zur Verfügung stellt. Die Fahrzeugumfeldberechnungseinrichtung 515 kann auch als ein elektronischer Horizont bezeichnet werden, da sie insbesondere ein Fernfeld, beispielsweise ab etwa 300m bezogen auf das Fahrzeug, des Fahrzeugumfelds berechnet. Die Fahrzeugumfeldberechnungseinrichtung 515 ist insbesondere eingerichtet, basierend auf den ihr zur Verfügung gestellten Daten eine Fahrzeugroute zu berechnen.

Die Fahrzeugumfeldberechnungseinrichtung 515 stellt das entsprechend berechnete Fahrzeugumfeld ebenfalls dem Fahrzeugumfeldmodul 509 zur Verfügung. Basierend auf den Sensorsignalen und dem berechneten Fahrzeugumfeld berechnet dann das Fahrzeugumfeldmodul 509 ein Fahrzeugumfeldmodell, was hier auch als ein erweitertes Fahrzeugumfeldmodell bezeichnet werden kann. Dieses erweiterte Modell wird über geeignete Schnittstellen dem Fahrzeugbewegungsmodul 507 zur Verfügung gestellt, welches entsprechend Steuersignale bildet und an Steuergeräte von Stellsystemen des Fahrzeugs ausgibt. Die mehreren Steuergeräte sind hier symbolisch mittels eines Rechtecks mit dem Bezugszeichen 519 gekennzeichnet. Das Signalverwaltungsmodul 503 verwaltet vorzugsweise in vorteilhafter Weise die ihm bereitgestellten Sensorsignale und kann diese beispielsweise nach vorbestimmten Regeln an die Steuergeräte 519 der Stellsysteme analog zu einem Router weiterleiten bzw. senden.

Weiterhin kann insbesondere vorgesehen sein, dass das Energieverwaltungsmodul 513 Informationen über einen Energiehaushalt, insbesondere über eine zur Verfügung stehende Energie, des Fahrzeugs an die Fahrzeugumfeldberechnungseinrichtung 515 übermittelt, so dass diese in vorteilhafter Weise eine momentane Fahrzeugroute bzw. Navigationsroute des Fahrzeugs entsprechend anpasst und/oder optimiert. Vorzugsweise übermittelt die Fahrzeugumfeldberechnungseinrichtung 515 digitale Karten, beispielsweise Topologiedaten, GPS-Daten, Daten externer Fahrzeuge und/oder externer Infrastrukturen an das Energieverwaltungsmodul 513, so dass dieses vorzugsweise in vorteilhafter Weise diese Informationen bei einer Reichweitenberechnung berücksichtigen kann.

Vorzugsweise kann vorgesehen sein, dass das Energieverwaltungsmodul 513 über die Energieverwaltungsschnittstelle Begrenzungen und/oder Stellreserven an das Fahrzeugbewegungsmodul 507 übermittelt. Solche Stellreserven können beispielsweise Stellreserven beim Rekuperieren und/oder eine Begrenzung einer Fahrzeuggeschwindigkeit umfassen.

Vorzugsweise kann vorgesehen sein, dass das Energieverwaltungsmodul 513 über eine Mensch-Maschinen-Schnittstelle Informationen über einen Energiehaushalt und/oder Fahranweisungen und/oder Fahrempfehlungen für eine Fahrzeugsteuerung bzw. Fahrzeugführung an einen Fahrer ausgibt bzw. bereitstellt, beispielsweise mittels eines Bildschirms.

Ein hier der Übersicht halber nicht dargestellter Priorisierer, welcher insbesondere in dem Signalverwaltungsmodul 505 oder in dem Fahrzeugbewegungsmodul 507 integriert sein kann, priorisiert abhängig von einer Fahrzeuglage die Steuersignale des Fahrzeugbewegungsmoduls 507 gegenüber den weiteren Steuersignalen des Energieverwaltungsmoduls 513, um in vorteilhafter Weise eine Stabilisierung des Fahrzeugs durchzuführen.

In einer nicht gezeigten Ausführungsform können die Schnittstellen zu den Umfeldsensoren entweder auf Merkmalsebene, beispielsweise erkannte Kanten bei Video, oder Objektebene, beispielsweise erkanntes Fahrzeug bei Radar oder Video, ausgebildet sein.

Für die Schnittstellen zu den Stellsystemen können vorzugsweise folgende Einflussgrößen auf eine Fahrzeugbewegung vorgesehen sein.

Insbesondere kann eine Längskraft Fₓ bei Aufträgen bzw. Anfragen zum Beschleunigen oder Verzögern als Einflussgröße vorgesehen sein. Bei einem Auftrag bzw. Anfrage für eine Beschleunigung wird ein Motorantriebssystem und/oder Getriebesystem als Stellsystem gesteuert. Bei einem Auftrag für eine Verzögerung wird insbesondere ein ESP und/oder ein Motorantriebssystem und/oder Getriebesystem als Stellsystem über ein entsprechendes Motorschleppmoment und/oder eine Rekuperationsbremsung bei Elektrofahrzeugen gesteuert.

Insbesondere kann als Einflussgröße auch ein Gier-Moment M_{z} bei Aufträgen bzw. Anfragen zur Änderung der Fahrtrichtung als Einflussgröße vorgesehen sein. Hierbei können über das ESP einseitige Bremseingriffe vorgenommen werden. Über eine elektronische Servolenkung auch EPS genannt, kann über einen nachgeschalteten Lenkmomentregler das angeforderte Gier-Moment in eine Lenkmomentanforderung umgewandelt werden.

Vorzugsweise kann vorgesehen sein, dass die entsprechenden Berechnungen in den einzelnen Komponenten des Systems 501 intern in der jeweiligen Komponente selber durchgeführt werden. Insbesondere kann vorgesehen sein, dass die entsprechenden Berechnungen extern von dem Fahrzeug durchgeführt werden, beispielsweise mittels eines externen Servers. Vorzugsweise kann eine Kombination aus interner und externer Berechnung, also sowohl im System 501 als auch im externen Server, vorgesehen sein. Eine entsprechende Kommunikation zwischen dem Fahrzeug und dem externen Server kann beispielsweise mittels des WLAN-Kommunikationsverfahrens und/oder des long term evolution (Ite)-Kommunikationsverfahrens durchgeführt werden.

In einer nicht gezeigten Ausführungsform kann vorgesehen sein, Radar- und/oder Videodaten von entsprechenden Radarsensoren bzw. Videosensoren zu fusionieren, um in vorteilhafter Weise eine vorausschauende Sicht, also insbesondere eine des realen Fahrzeugumfelds entsprechende Ansicht, zu erzeugen.

In einer weiteren nicht gezeigten Ausführungsform können Karten und/oder Navigationsdaten und/oder externe Umfeldsensordaten für eine prädiktive Sicht, also insbesondere eine berechnete Ansicht des Fahrzeugumfelds, fusioniert werden.

In einer anderen nicht gezeigten Ausführungsform kann vorgesehen sein, abhängig von einer Signalqualität und einer Anzahl bezogen auf die Umfeldsensoren die entsprechenden Umfeldsensordaten bzw. Daten einzustufen und dies in vorteilhafter Weise bei einer Freischaltung von entsprechenden Fahrerassistenzfunktionen zu berücksichtigen. Das heißt also insbesondere, dass den Daten, insbesondere den Umfeldsensordaten, ein Gütefaktor zugeordnet wird, wobei beispielsweise eine Fahrerassistenzfunktion erst frei geschaltet wird, wenn der Gütefaktor größer als ein vorbestimmter Gütewert ist.

In einer anderen nicht gezeigten Ausführungsform kann vorgesehen sein, eine Objektliste des Fahrzeugumfelds zu erzeugen bzw. zu bilden. Hierbei werden insbesondere physische Objekte in dem Fahrzeugumfeld, also in den entsprechenden Daten, erkannt und klassifiziert, so dass daraus eine entsprechende Objektliste erzeugt werden kann. Vorzugsweise kann vorgesehen sein, dass basierend auf der erzeugten Objektliste ein mittels des Fahrzeugs befahrbarer Raum des Fahrzeugumfelds berechnet wird.

Dadurch ist insbesondere in vorteilhafter Weise ermöglicht, dass situativ auf andere Verkehrsteilnehmer und/oder auf feststehende Hindernisse sowohl prädiktiv auf die Topologie als auch auf eine potenzielle Streckenführung reagiert werden kann.

In einer anderen nicht gezeigten Ausführungsform kann vorgesehen sein, dass eine Sensordatenfusion basierend auf Umfeldsensordaten von mehreren Umfeldsensoren durchgeführt wird. Basierend auf den fusionierten Umfeldsensordaten wird ein Fahrzeugumfeldmodell berechnet, welches insbesondere eine Nahansicht des Fahrzeugumfelds, eine Fernansicht des Fahrzeugumfelds und eine prädiktive Ansicht des Fahrzeugumfelds bereitstellt. Eine Nahansicht kann beispielsweise eine Reichweite von etwa 300m relativ zum Fahrzeug. Es kann vorzugsweise vorgesehen sein, dass eine Bewertung der momentanen Fahrsituation basierend auf der Nahansicht und/oder der Fernansicht und/oder der prädiktiven Ansicht durchgeführt wird. Hierbei kann vorgesehen sein, dass physische Objekte in dem Fahrzeugumfeld erkannt und klassifiziert werden, so dass in vorteilhafter Weise insbesondere eine Objektliste des Fahrzeugumfelds gebildet werden kann. Vorzugsweise kann vorgesehen sein, dass basierend auf der Objektliste ein oder mehrere mittels des Fahrzeugs befahrbare Räume bzw. Bereiche des Fahrzeugumfelds berechnet bzw. erkannt werden. Insbesondere kann vorgesehen sein, dass der oder die befahrbaren Bereiche bzw. Räume dem Fahrzeugbewegungsmodul bereitgestellt wird, so dass dieses in vorteilhafter Weise entsprechende Steuersignale für Steuerungen von Stellsystemen bilden und an diese senden kann, um beispielsweise eine Kollision mit den physischen Objekten zu vermeiden.

## Patentansprüche

1. Vorrichtung (101, 201, 402, 503) zum Betreiben eines Fahrzeugs, umfassend ein Fahrzeugumfeldmodul (103, 509) zum Bereitstellen eines Fahrzeugumfeldmodells mit mehreren Sensorschnittstellen (105) für Umfeldsensoren (403, 511) zum sensorischen Erfassen eines Fahrzeugumfelds, einen Sensordatenfusionierer (107) zum Durchführen einer Sensordatenfusion der Umfeldsensordaten der Umfeldsensoren (403, 511), wobei eine Berechnungseinrichtung (109) zum Berechnen des Fahrzeugumfeldmodells in Abhängigkeit der fusionierten Umfeldsensordaten gebildet ist, wobei die Sensordatenfusion eine Verknüpfung der Umfeldsensordaten der mehreren Umfeldsensoren (403, 511) umfasst, wobei das Fahrzeugumfeldmodul (103, 509) eine Navigationsschnittstelle für ein Navigationssystem umfasst, wobei der Sensordatenfusionierer (107) eingerichtet ist, die mittels des Navigationssystems bereitgestellten Navigationsdaten mit den Umfeldsensordaten zu fusionieren, wobei das Fahrzeugumfeldmodul (103, 509) eine Kommunikationsschnittstelle für ein Kommunikationssystem zum Empfangen von, einem Fahrzeugumfeld entsprechenden, extern von dem Fahrzeug ausgesandten, externen Umfeldsensordaten vorsieht, und wobei der Sensordatenfusionierer (107) ausgebildet ist, die externen Umfeldsensordaten mit den Umfeldsensordaten zu fusionieren, **dadurch gekennzeichnet, dass** die externen Umfeldsensordaten von weiteren Umfeldsensoren von weiteren Fahrzeugen gebildet sind, wobei eine Kommunikation zwischen dem Fahrzeug und den weiteren Fahrzeugen mittels des Car2Car-Kommunikationsverfahrens durchgeführt wird.

2. Vorrichtung (101, 201, 402, 503) nach Anspruch 1, wobei das Fahrzeugumfeldmodul (103, 509) eine Fahrzeugbewegungsschnittstelle (405) für ein Fahrzeugbewegungsmodul (407) umfasst, welches ausgebildet ist, Steuersignale für ein Steuergerät (519) eines Stellsystems des Fahrzeugs abhängig von dem bereitgestellten Fahrzeugumfeldmodell zu bilden.

3. Vorrichtung (101, 201, 402, 503) nach einem der vorherigen Ansprüche, wobei die Berechnungseinrichtung (109) ausgebildet ist, einen mittels des Fahrzeugs befahrbaren Raum zu berechnen.

4. Verfahren zum Betreiben eines Fahrzeugs, wobei Umfeldsensordaten von mehreren Umfeldsensoren (403, 511) zum sensorischen Erfassen eines Fahrzeugumfelds fusioniert (301) werden und abhängig von den fusionierten Umfeldsensordaten ein Fahrzeugumfeldmodell berechnet (303) wird, wobei die Sensordatenfusion eine Verknüpfung der Umfeldsensordaten der mehreren Umfeldsensoren (403, 511) umfasst, **dadurch gekennzeichnet, dass** einem Fahrzeugumfeld entsprechende extern von dem Fahrzeug ausgesandte externe Umfeldsensordaten empfangen werden, die mit den Umfeldsensordaten fusioniert werden, wobei Navigationsdaten eines Navigationssystems mit den Umfeldsensordaten fusioniert werden, **dadurch gekennzeichnet, dass** die externen Umfeldsensordaten von weiteren Umfeldsensoren von weiteren Fahrzeugen gebildet sind, wobei eine Kommunikation zwischen dem Fahrzeug und den weiteren Fahrzeugen mittels des Car2Car-Kommunikationsverfahrens durchgeführt wird.

5. Verfahren nach Anspruch 4, wobei eine Erkennung und eine Klassifizierung von physischen Objekten des Fahrzeugumfelds in den fusionierten Umfeldsensordaten durchgeführt werden.

6. System (401) zum Betreiben eines Fahrzeugs, umfassend die Vorrichtung (101, 201, 402, 503) nach einem der Ansprüche 2 bis 3 soweit rückbezogen auf Anspruch 2, wobei an den Sensorschnittstellen (105) jeweils ein Umfeldsensor (403, 511) angekoppelt und an der Fahrzeugbewegungsschnittelle (405) das Fahrzeugbewegungsmodul (407) angekoppelt sind.

7. Computerprogramm, umfassend Programmcode zur Ausführung des Verfahrens nach einem der Ansprüche 4 oder 5, wenn das Computerprogramm auf einem Computer ausgeführt wird, der eine Vorrichtung nach Anspruch 1 betreibt.

## Claims

1. Device (101, 201, 402, 503) for operating a vehicle, comprising a vehicle surroundings module (103, 509) for providing a vehicle surroundings model, having a plurality of sensor interfaces (105) for surroundings sensors (403, 511) for the sensor-based detection of vehicle surroundings, a sensor data fuser (107) for performing a sensor data fusion of the surroundings sensor data from the surroundings sensors (403, 511), wherein a calculating apparatus (109) for calculating the vehicle surroundings model is formed on the basis of the fused surroundings sensor data, wherein the sensor data fusion comprises linking the surroundings sensor data from the plurality of surroundings sensors (403, 511), wherein the vehicle surroundings module (103, 509) comprises a navigation interface for a navigation system, wherein the sensor data fuser (107) is designed to fuse the navigation data provided by way of the navigation system with the surroundings sensor data, wherein the vehicle surroundings module (103, 509) is provided a communication interface for a communication system for receiving external surroundings sensor data sent externally from the vehicle corresponding to vehicle surroundings, and wherein the sensor data fuser (107) is designed to fuse the external surroundings sensor data with the surroundings sensor data, **characterized in that** the external surroundings sensor data are formed by further surroundings sensors of further vehicles, wherein communication is performed between the vehicle and the further vehicles by way of the car-2-car communication method.

2. Device (101, 201, 402, 503) according to Claim 1, wherein the vehicle surroundings module (103, 509) comprises a vehicle movement interface (405) for a vehicle movement module (407) that is designed to form control signals for a controller (519) of an actuator system of the vehicle on the basis of the provided vehicle surroundings model.

3. Device (101, 201, 402, 503) according to either of the preceding claims, wherein the calculating apparatus (109) is designed to calculate a space able to be travelled by the vehicle.

4. Method for operating a vehicle, wherein surroundings sensor data from a plurality of surroundings sensors (403, 511) are fused (301) for the sensor-based detection of vehicle surroundings and a vehicle surroundings model is calculated (303) on the basis of the fused surroundings sensor data, wherein the sensor data fusion comprises linking the surroundings sensor data from the plurality of surroundings sensors (403, 511), **characterized in that** external surroundings sensor data sent externally from the vehicle corresponding to vehicle surroundings are received and are fused with the surroundings sensor data, wherein navigation data from a navigation system are fused with the surroundings sensor data, **characterized in that** the external surroundings sensor data are formed by further surroundings sensors of further vehicles, wherein communication between the vehicle and the further vehicles is performed by way of the car-2-car communication method.

5. Method according to Claim 4, wherein physical objects in the vehicle surroundings are identified and classified in the fused surroundings sensor data.

6. System (401) for operating a vehicle, comprising the device (101, 201, 402, 503) according to either of Claims 2 and 3 when referring back to Claim 2, wherein a respective surroundings sensor (403, 511) is coupled to the sensor interfaces (105) and the vehicle movement module (407) is coupled to the vehicle movement interface (405) .

7. Computer program comprising program code for executing the method according to either of Claims 4 and 5 when the computer program is executed on a computer that operates a device according to Claim 1.

## Revendications

1. Dispositif (101, 201, 402, 503) de fonctionnement d'un véhicule comprenant un module d'environnement de véhicule (103, 509), destiné à fournir un modèle d'environnement de véhicule pourvu d'une pluralité d'interfaces de capteurs (105) destinées à des capteurs d'environnement (403, 511) destinés à la détection sensorielle d'un environnement de véhicule, un fusionneur de données de capteur (107) destiné à effectuer une fusion des données des capteurs d'environnement (403, 511), un moyen de calcul (109) étant formé pour calculer le modèle d'environnement de véhicule en fonction des données de capteur d'environnement fusionnées, la fusion de données de capteur comprenant une combinaison des données de capteur d'environnement de la pluralité de capteurs d'environnement (403, 511), le module d'environnement de véhicule (103, 509) comprenant une interface de navigation destinée à un système de navigation, le fusionneur de données de capteur (107) étant conçu pour fusionner les données de navigation, fournies par le système de navigation, avec les données de capteur d'environnement, le module d'environnement de véhicule (103, 509) étant pourvu d'une interface de communication destinée à un système de communication pour recevoir des données de capteur d'environnement extérieures correspondant à l'environnement de véhicule et transmises à l'extérieur par le véhicule, et le fusionneur de données de capteur (107) étant conçu pour fusionner les données de capteur d'environnement extérieures avec les données de capteur d'environnement, **caractérisé en ce que** les données de capteur d'environnement extérieures sont formées par d'autres capteurs d'environnement d'autres véhicules, la communication entre le véhicule et les autres véhicules étant effectuée au moyen du procédé de communication Car2Car.

2. Dispositif {101, 201, 402, 503) selon la revendication 1, le module d'environnement de véhicule (103, 509) comprenant une interface de mouvement de véhicule (405) destinée à un module de mouvement de véhicule (407) qui est conçu pour former des signaux de commande destinés à une unité de commande (519) d'un système de positionnement du véhicule en fonction du modèle d'environnement de véhicule fourni.

3. Dispositif (101, 201, 402, 503) selon l'une des revendications précédentes, le moyen de calcul (109) étant conçu pour calculer un espace qui peut être parcouru par le véhicule.

4. Procédé de fonctionnement d'un véhicule, les données de capteur d'environnement d'une pluralité de capteurs d'environnement (403, 511) étant fusionnées (301) pour la détection sensorielle d'un environnement de véhicule et un modèle d'environnement de véhicule étant calculé (303) en fonction des données de capteur d'environnement fusionnées, la fusion de données de capteur comprenant une combinaison des données de capteur d'environnement des multiples capteurs d'environnement (403, 511), **caractérisé en ce que** les données de capteur d'environnement extérieures, correspondant à un environnement de véhicule et envoyées de l'extérieur par le véhicule, sont reçues et fusionnées avec les données de capteur d'environnement, les données de navigation d'un système de navigation étant fusionnées avec les données de capteur d'environnement, **caractérisé en ce que** les données de capteur d'environnement extérieures sont formées par d'autres capteurs d'environnement d'autres véhicules, la communication entre le véhicule et les autres véhicules étant effectuée au moyen du procédé de communication Car2Car.

5. Procédé selon la revendication 4, une détection et une classification d'objets physiques de l'environnement de véhicule étant effectuées dans les données de capteur d'environnement fusionnées.

6. Système (401) de fonctionnement d'un véhicule comprenant le dispositif (101, 201, 402, 503) selon l'une des revendications 2 à 3 dans la mesure où elle dépend de la revendication 2, un capteur d'environnement (403, 511) étant couplé à chacune des interfaces de capteur (105) et le module de mouvement de véhicule (407) étant couplé à l'interface de mouvement de véhicule (405).

7. Logiciel comprenant un code de programme destiné à mettre en œuvre le procédé selon l'une des revendications 4 et 5 lorsque le logiciel est exécuté sur un ordinateur qui exploite un dispositif selon la revendication 1.
